# EUROPEAN PATENT SPECIFICATION

(11) **EP 3 610 683 B1**
(45) Date of publication and mention of the grant of the patent: **29.09.2021**
(21) Application number: 18718747.1
(22) Date of filing: 10.04.2018
(51) Int. Cl.: H04W 64/00, G01S 5/02, H04W 12/122, G01S 5/14

(54) **LOCATION DETERMINATION BASED ON TIMING ADVANCE VALUES**
STANDORTBESTIMMUNG AUF DER BASIS VON ZEITVORLAUFSWERTEN
DÉTERMINATION D'EMPLACEMENT BASÉE SUR DES VALEURS D'AVANCE TEMPORELLE

(30) Priority: 10.04.2017 IN 201711012740
(43) Date of publication of application: 19.02.2020
(73) Proprietor: Nokia Solutions and Networks Oy, 02610 Espoo (FI)
(72) Inventor: SELVAGANAPATHY, Srinivasan, Bangalore 560117 (IN); HOFMANN, Juergen, 86504 Merching (DE)
(74) Representative: Nokia EPO representatives
(86) International application number: PCT/EP2018/059071
(87) International publication number: WO 2018/189132

(56) References cited:
- WO-A1-2016/154944
- "3rd Generation Partnership Project; Technical Specification Group Radio Access Network; Functional stage 2 description of Location Services (LCS) in GERAN (Release 14)", 3GPP STANDARD ; TECHNICAL SPECIFICATION ; 3GPP TS 43.059, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG6, no. V14.0.0, 20 March 2017 (2017-03-20), pages 1-82, XP051291179, [retrieved on 2017-03-20]
- NOKIA: "Radio Interface Enhancements for TA based multilateration", 3GPP DRAFT; R6-160195 RADIO INTERFACE ENHANCEMENTS FOR TA MULTILATERATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDE , vol. TSG RAN, no. Reno, Nevada, U.S.A.; 20161114 - 20161118 9 November 2016 (2016-11-09), XP051198871, Retrieved from the Internet: URL:http://www.3gpp.org/ftp/tsg_ran/WG6_le gacyRAN/TSGR6_02/Docs/ [retrieved on 2016-11-09]

## Description

One technique for determining location of a radio communication device is multilateration involving determining the location of a radio communication device based on timing advance (TA) values estimated for the communication device from radio transmissions received at respective network nodes.

This multilateration technique comprises a radio communication device whose location is to be determined attempting uplink transmissions via a plurality of network cells (operated via respective base stations), and transmitting via the network cells device information useful for estimating TA values for the communication device.

The inventors for the present application have identified the risk of a rogue device detecting a temporary identifier for a communication device from an uplink transmission made by the communication device via one cell as part of location determination procedure, and the rogue device then making one or more rogue transmissions via one or more other cells using the same temporary identifier but different communication device information, which rogue transmissions could lead to an error in the determination of a location for the communication device.

One aim of the present invention is to reduce the risk of erroneous location determinations caused by rogue devices.

3GPP TS 43.059 V14.0.0 clause 9.6 describes Multilateration Timing Advance methods wherein a mobile station identity is conveyed either in an RLC data block, an access burst or an extended access burst.

3GPP TDoc R6-160195 describes a Multilateration Timing Advance procedure using a dedicated resource for access burst transmission and wherein the dedicated resource for access burst transmission and a Positioning Reference Temporary Identifier are indicated to the mobile station using secure signalling.

The invention is set out in the appended set of claims.

Example embodiments are described in detail, hereunder, by way of example only, with reference to the accompanying drawings, in which:
Figure 1 illustrates an example of an environment in which an embodiment of the present invention may be implemented;
Figure 2 illustrates an example of an apparatus for a communication device in Figure 1;
Figure 3a illustrates an example for an apparatus for a base transceiver station in Figure 1;
Figure 3b illustrates an example of apparatus for the BSC, SGSN and SMLC of Figure 1;
Figure 4 illustrates an example of a set of operations at a communication device in Figure 1 in accordance with a first embodiment of the present invention;
Figure 5 illustrates an example of a set of operations at BSS and SGSN in Figure 1 in accordance with a first embodiment of the present invention;
Figure 6 illustrates an example of a set of operations at SMLC in Figure 1 in accordance with a first embodiment of the present invention.
Figure 7 illustrates an example of a set of messages in accordance with a first embodiment of the present invention;
Figure 8 illustrates an example of generating a MTA signature in a first embodiment of the present invention;
Figure 9 illustrates an example of a set of operations at a communication device in Figure 1 in accordance with a second embodiment of the present invention; this embodiment is however not covered by the claims;
Figure 10 illustrates an example of a set of operations at a base station controller in Figure 1 in accordance with a second embodiment of the present invention; this embodiment is however not covered by the claims;
Figure 11 illustrates an example of a set of messages in accordance with a second embodiment of the present invention; this embodiment is however not covered by the claims;
Figure 12 illustrates an example of a set of operations at a communication device in Figure 1 in accordance with a third embodiment of the present invention; and
Figure 13 illustrates an example of a set of operations at a base station controller in Figure 1 in accordance with a third embodiment of the present invention.

Embodiments are described below for the example of a 3GPP (3^{rd} Generation Partnership Project) GERAN (GSM (Global System for Mobile Communications) EDGE (Enhanced Data rates for GSM Evolution) Radio Access Network) network, but the same kind of techniques are also of use with other kinds of radio access networks.

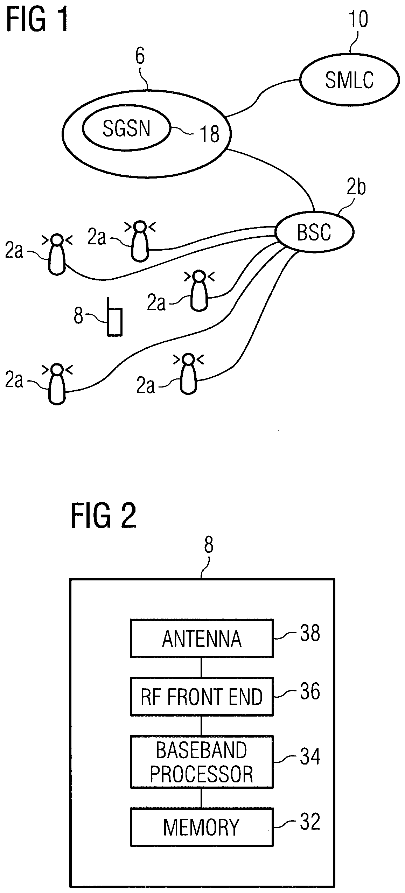

Figure 1 schematically shows an example of a mobile station (MS) (for example, low complexity devices such as MTC devices or Internet of Things (loT) devices, or any other type of wireless communication device) 8 located within the coverage area of a plurality of cells operated via respective base transceiver stations (BTS) 2a of a base station subsystem (BSS) 2 also comprising a base station controller (BSC) 2b connected to each of the BTSs 2a. Figure 1 only shows a small number of BTSs 2a, but a BSS 2 typically comprises a large number of BTSs 2a each associated with a respective one or more cells.

The BSS 2 is typically connected to a core network (CN) 6 including e.g. a serving GPRS (General Packet Radio Service) support node (SGSN) 18 and other core network entities (not shown), and the CN 6 is connected e.g. to a serving mobile location centre (SMLC) 10 and may be connected to e.g. one or more other support entities (not shown).

Figure 2 shows a schematic view of an example of apparatus for each MS 8. The MS 8 may be any device at least capable of both recovering data/information from radio transmissions made by the BSS, and making radio transmissions from which data/information is recoverable by the BSS 2. Non-limiting examples of MS 8 include low complexity devices without any user interface, such as devices that are designed for machine type communications (MTC) and/or Internet of Things (loT).

With reference to Figure 2, a baseband processor 34, operating in accordance with program code stored at memory 32, controls the generation and transmission of radio signals via radio-frequency (RF) front end 36 and antenna 38. The RF front end 36 may include an analogue transceiver, filters, a duplexer, and antenna switch. Also, the combination of antenna 38, RF front end 36 and baseband processor 34 recovers data/information from radio signals reaching MS 8 from e.g. BSS 2. The MS 8 may also comprise an application processor (not shown) that generates user data for transmission via radio signals, and processes user data recovered from radio signals by baseband processor 34 and stored at memory 32.

The application processor and the baseband processor 34 may be implemented as separate chips or combined into a single chip. The memory 32 may be implemented as one or more chips. The memory 32 may include both read-only memory and random-access memory. The above elements may be provided on one or more circuit boards.

The MS 8 may include additional other elements not shown in Figure 2.

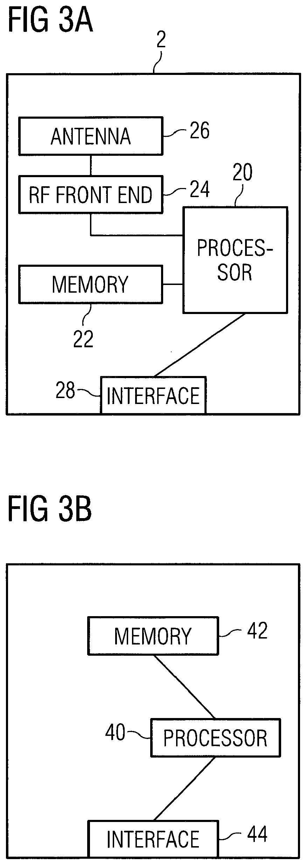

Figure 3a shows an example of apparatus for use at a BTS 2 of Figure 1. A processor 20, operating in accordance with program code stored at memory 22, (a) controls the generation and transmission of radio signals via the combination of RF front end 24 and antenna 26; and (b) recovers control information/data from radio transmissions reaching the BTSs from e.g. MSs 8. The RF front end may include an analogue transceiver, filters, a duplexer, and antenna switch. Both the processor 20 and the memory 22 may be implemented as one or more chips. The memory 22 may include both read-only memory and random-access memory. The above elements may be provided on one or more circuit boards. The apparatus also comprises an interface 28 for transferring data to and from one or more other entities such as e.g. core network entities, mobile management entities, and other base stations in the same access network.

Figure 3b shows an example of apparatus for use at BSC 4, SGSN 18 and SMLC 10 of Figure 1. A processor 40, operating in accordance with program code stored at memory 42, processes data received from outside network entities via interface 44 and/or data received stored at memory 42, and controls the sending of messages to outside entities via interface 44. Both the processor 40 and the memory 42 may be implemented as one or more chips. The memory 42 may include both read-only memory and random-access memory.

It should be appreciated that the apparatus shown in each of figures 2 to 3 described above may comprise further elements which are not directly involved with the embodiments of the invention described hereafter.

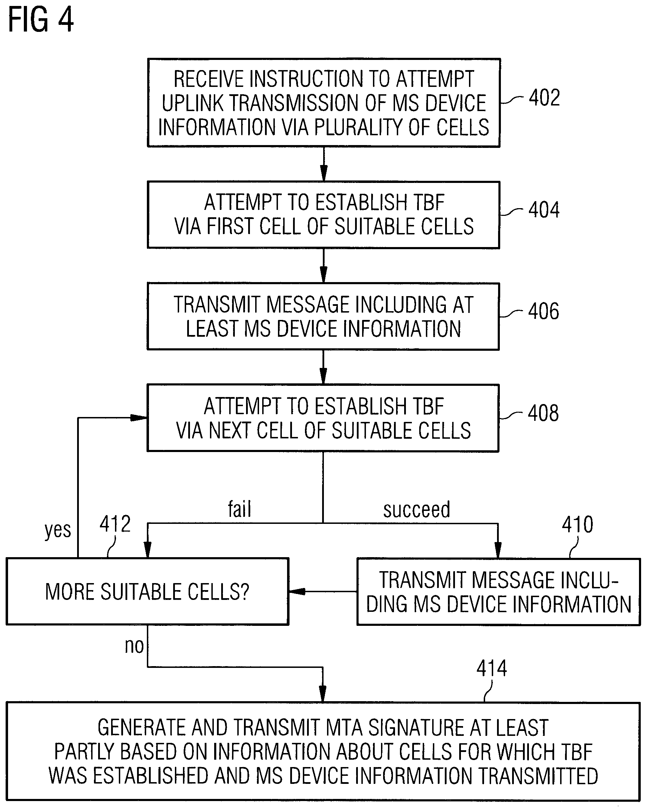

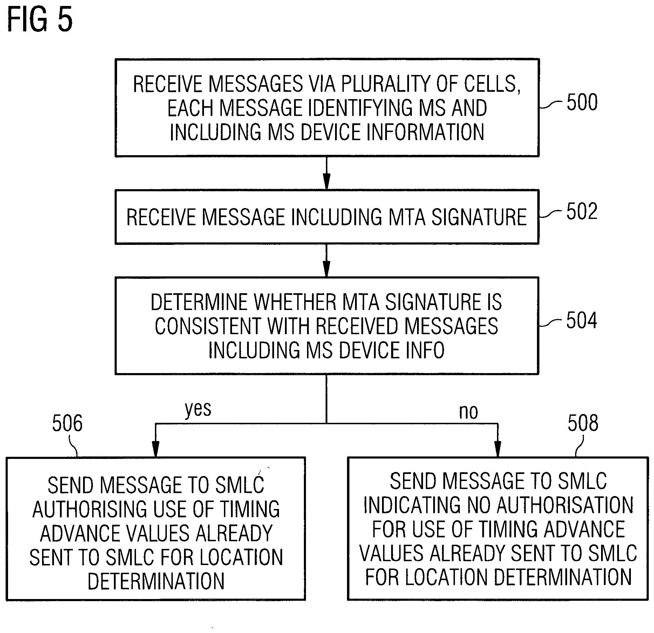

Figure 4 illustrates an example of operations at the baseband processor 34 of MS 8 in accordance with a first embodiment. All operations carried out by the MS processor 34 follow program code stored at MS memory 32. Figure 5 illustrates an example of matching operations at processors at the BSC 2b and SGSN 18 in accordance with a first embodiment. All operations carried out by BSC and SGSN processors follow program code stored at BSC and SGSN memory, respectively.

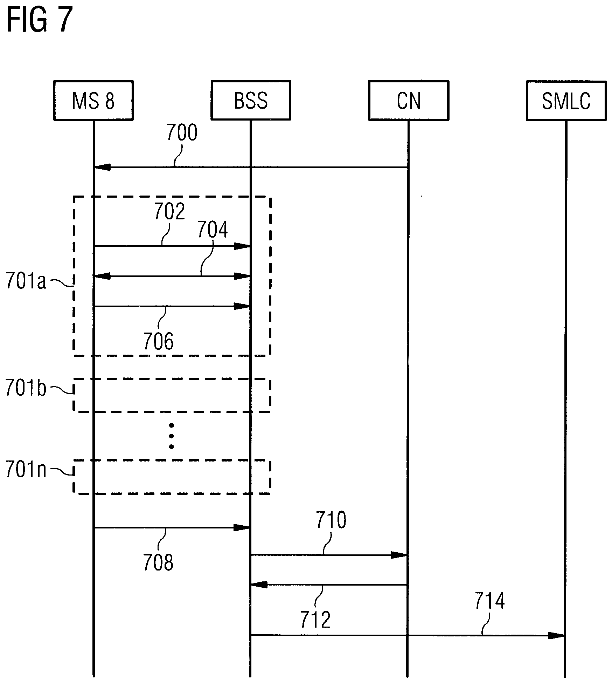

In response to detecting an integrity-protected and encrypted Logical Link Control (LLC) protocol data unit (PDU) comprising a RRLP (Radio Resource Link Protocol) multilateration TA request (message 700 of Figure 7) from SGSN 18 in radio transmissions via the cell currently serving MS 8 (STEP 402 of Figure 4), the MS processor 34 determines suitable cells for multilateration based on one or more measured parameters of radio transmissions of other cells detected via RF front end 36 and antenna 38. The transmission of the RRLP multilateration TA request message is protected such that the intended receiver can verify from the transmission itself that the contents of the message have not been modified by some intermediate entity. For a first suitable cell, the MS processor 34 controls the transmission of a multilateration request via a random access channel (RACH) of the cell (message 702 of Figure 7 and STEP 404 of Figure 4). In response to determining the request was successful, the MS processor 34 controls the establishment of a dedicated connection (temporary block flow - TBF) with the BSS via the BTS for the cell (message exchange 704 in Figure 7), and controls the unprotected transmission of a Radio Link Control (RLC) block via the dedicated connection (message 706 of Figure 7, STEP 406 of Figure 4 and STEP 500 of Figure 5). The absence of protection for this transmission means that the intended receiver cannot confirm from the transmission itself that the content of the message has not been modified by some intermediate entity. The RLC block includes at least an identifier for the MS (e.g. temporary logical link identifier -TLLI), and MS device information for the MS in the cell including a MS synchronisation accuracy parameter and a MS transmission offset parameter for the MS in the cell. The MS synchronisation accuracy parameter for the MS in the cell indicates the accuracy with which the MS determines the downlink timing of transmissions of the cell. The MS transmission offset parameter for the MS in the cell indicates the offset between the timing of uplink transmissions by the MS in the cell and the timing of downlink transmissions for the same cell. Each of these two communication device parameters may have different values for the same MS in different cells. The final value and accuracy of the timing advance estimation made by the BSS for a cell depends on these parameters. One specific example for these two parameters is MS Synchronisation Accuracy and MS Transmission Offset defined in TS 43.059 Version 14.0.0.

Once the transmission of the RLC block via the first suitable cell is complete (or if the attempt to establish a dedicated connection via the first suitable cell failed), the MS processor 34 then repeats the process described above for the first suitable cell comprising the messages shown as block 701 in Figure 7) for a second suitable cell. In detail, the MS processor 34 controls the transmission of a multilateration request via a random access channel (RACH) of the second suitable cell (STEP 408 of Figure 4), and in response to determining the request was successful, the MS processor 34 controls the establishment of a dedicated connection (temporary block flow - TBF) with the BSS 2 via the BTS 2a for the second suitable cell, and controls the unprotected transmission of an RLC block via the dedicated connection (STEP 410 of Figure 4 and STEP 500 of Figure 5). The RLC block includes at least the same MS identifier (e.g. same TLLI), and MS device information for the MS in the second suitable cell including MS synchronisation accuracy and MS transmission offset parameters for the MS in the second suitable cell.

Once the transmission of the RLC block via the second suitable cell is complete (or if the attempt to establish a dedicated connection via the second cell failed), the MS processor then repeats the same procedure (set of messages 701 in Figure 7) for the next cell in the set of cells identified as suitable for multilateration, and so on. For each cell, the RLC block includes respective MS device information (MS synchronisation accuracy and MS transmission offset parameters) for the MS in the cell.

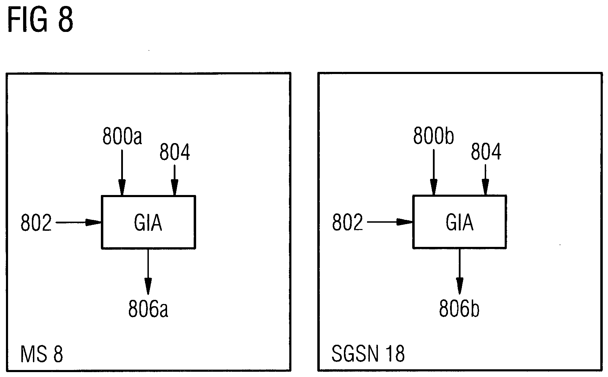

If the MS processor 34 determines that there are no more suitable cells via which to attempt the transmission of MS device information (STEP 412 of Figure 4), the MS processor 34 generates a 32-bit integrity protection value (hereafter referred to as the Multilateration Timing Advance (MTA) signature) using e.g. the GPRS Integrity Algorithm (GIA) with inputs including at least (i) the Integrity Protection key Ki-128 (Input 802 of Figure 8), and (ii) the content of all the above-mentioned RLC blocks successfully transmitted to the network and the cell identifiers (e.g. BSIC) for all the cells via which the RLC blocks were successfully transmitted to the network (Input 800a of Figure 8). The inputs may also include one or more other predetermined parameters (Input 804 of Figure 8). One example of additional inputs are the Constant F and Input I used with the same integrity algorithm GIA for generating a message authentication code (MAC) for verifying the integrity of a non-access stratum (NAS) message, as described in 3GPP TS 43.020 Annex H. The MS processor 34 controls transmission of the MTA signature to the network (Message 708 in Figure 7 and STEP 414 of Figure 4).

According to one example variation, the MS processor 34 includes the MTA signature together with the MS device information in the RLC block for the last of the cells that it has identified as suitable for multilateration, and only includes the MTA signature in an additional later message, if it is not possible to include the MTA signature together with the MS device information in the RLC block for the last suitable cell, e.g. because the attempt to transmit MS device information in the last suitable cell happens to fail, or because the multilateration procedure happens to be interrupted in order to transmit high priority uplink data.

Figure 5 illustrates an example of a matching set of operations at the BSS 2 and SGSN 18. A processor at BSC 2b controls the transmission to the SGSN 18 of (i) all received RLC blocks including the same MS identifier and MS device information, (ii) the cell identifiers (e.g. BSIC) for the cells via which the RLC blocks were respectively received, and (iii) the received MTA signature mentioned above (BSSGP (BSS GPRS Protocol): Multilateration-Complete message 710 of Figure 7). The SGSN processor independently computes a MTA signature in the same way using the same GIA and using the same inputs as the MS processor 34 except that the SGSN processor uses the content of all the above-mentioned RLC blocks received from the BSS 2 for the same MS identifier (instead of all the RLC blocks generated at the MS 8) as part of Input 800b of Figure 8.

The independent computation of the MTA signature at MS and SGSN is shown in Figure 7.

The SGSN processor determines whether the MTA signature computed by the SGSN processor matches the MTA signature received from the BSS 2 (STEP 504 of Figure 5), and controls the transmission to the BSS 2 of a BSSGP: Multilateration-Complete-Confirm message (message 712 in Figure 7) indicating the result of the comparison. If the MTA signatures match, this indicates that all the RLC blocks were transmitted by the same MS (and do not include any RLC blocks transmitted by a rogue device pretending to be the MS by using the same MS identifier), and the BSC processor controls the transmission to the SMLC of a BSSMAP (BSS Management Application Part) Multilateration-Confirm message (message 714 of Figure 7) indicating that the set of TA advance values estimated at least partly on the basis of information in the above-mentioned received RLC blocks and already sent from the BSS 2 to the SMLC 10 are now authorised for use in determining the location of the MS 8 (STEP 506 of Figure 5); and the SMLC processor computes a location for the MS 8 based on the set of authorised estimated TA values for the MS 8.

On the other hand, if the MTA signatures generated at the MS 8 and the SGSN 18 do not match, this indicates that one or more of the received RLC blocks were not in fact transmitted by the same MS 8 (but transmitted by a rogue device pretending to be the MS by using the same MS identifier), and the BSC processor controls the transmission to the SMLC of a BSSMAP message indicating that the set of TA advance values estimated at least partly on the basis of information in the above-mentioned received RLC blocks and already sent from the BSS 2 to the SMLC 10 is not authorised for use in determining the location of the MS (STEP 508 of Figure 5); and the SMLC processor does not use the set of received TA values to compute a location for the MS 8.

The MTA signature transmitted by the MS 8 thus provides a verifiable link between all the RLC block transmissions made by the MS via respective different cells, and enables the network to check whether all received RLC blocks including the same MS identifier properly originated from the same MS 8.

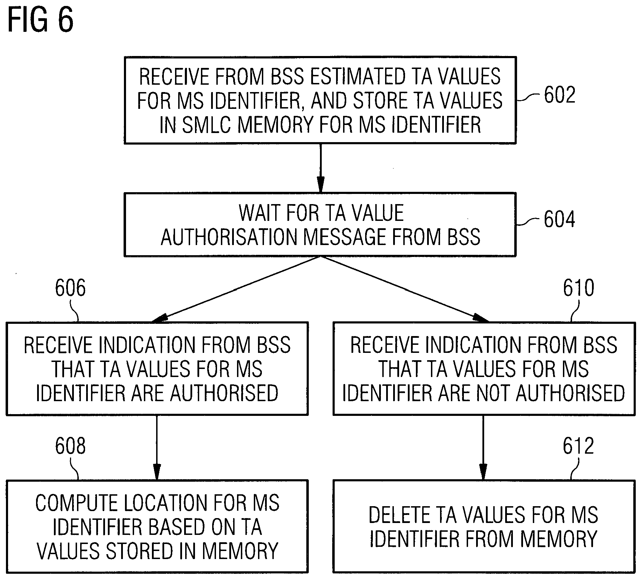

Figure 6 illustrates an example of a set of operations at a SMLC processor in accordance with the first embodiment. The SMLC processor receives estimated TA values from BSS, and stores the TA values associated with the MS identifier in SMLC memory (STEP 602 of Figure 6). The SMLC processor does not proceed immediately with computation of a location based on the received estimated TA values, but first waits for an authorisation message from BSS 2 (STEP 604 of Figure 6). In response to detecting a message from BSS 2 indicating that the TA values are authorised (message 714 in Figure 7 and STEP 606 of Figure 6), the SMLC processor retrieves the set of estimated TA values from SMLC memory and computes a location for the MS 8 using the estimated TA values (STEP 608 of Figure 6). In response to detecting a message from the BSS indicating that the set of estimated TA values are not authorised (STEP 610 of Figure 6), the SMLC processor controls the deletion of the set of TA values from SMLC memory (STEP 612 of Figure 6), and does not compute a location for the MS based on the set of TA values.

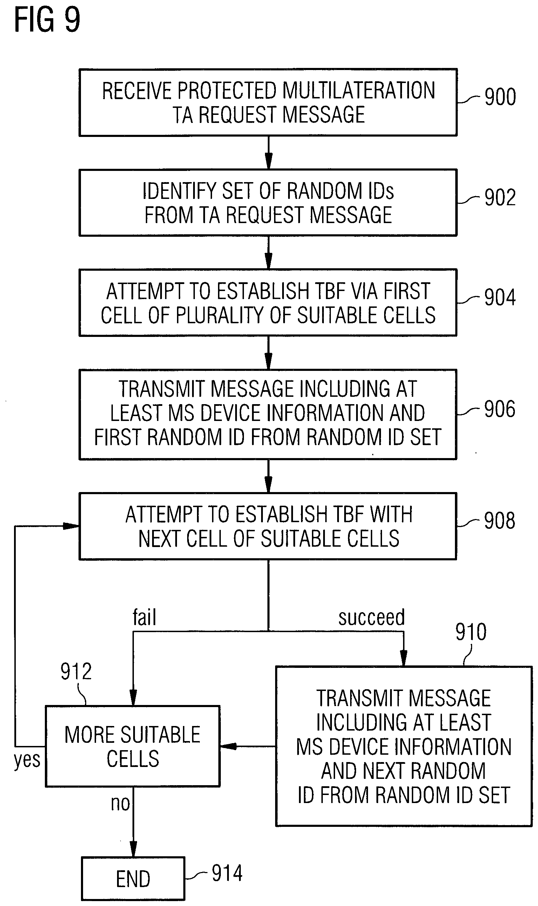

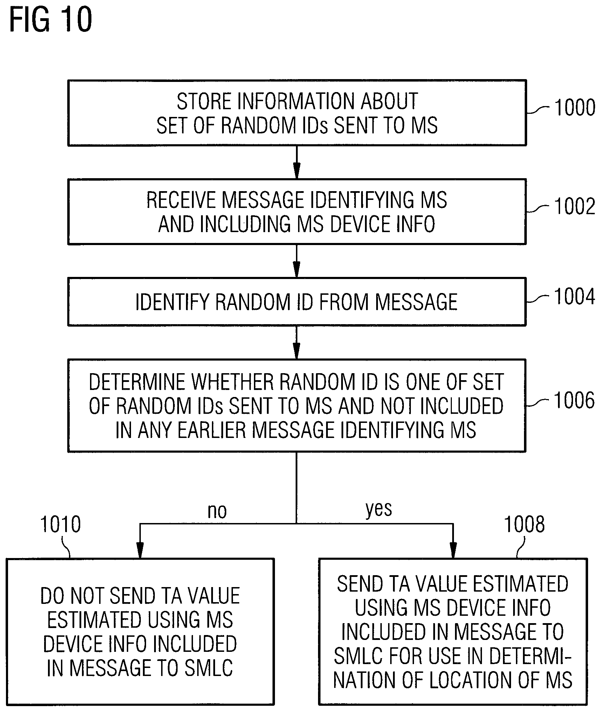

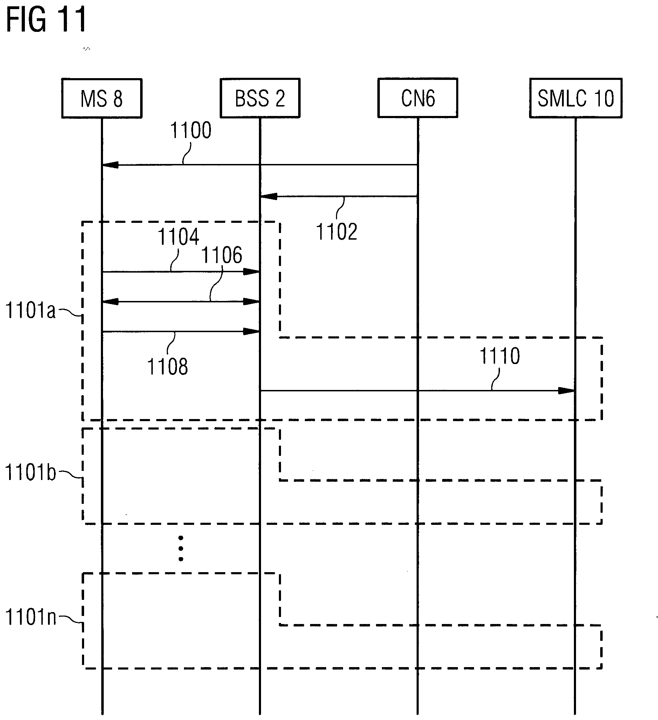

Figure 9 illustrates an example of a set of operations at MS processor 34 in accordance with a second embodiment of the present invention, and Figure 10 illustrates an example of a set of operations at BSS 2 in accordance with a second embodiment of the present invention. The second embodiment is however not covered by the claims. All operations carried out by MS and BSC processors follow program code stored at MS and BSC memory, respectively. The second embodiment involves the SGSN processor generating a set of random identifiers for inclusion in the encrypted LLC PDU comprising a RRLP: Multilateration TA Request to the MS (message 1100 in Figure 11), and the SGSN processor controlling the provision of the set of random identifiers also to BSS in a BSSGP: Multilateration-Binding-Information message (message 1102 in Figure 11). The total number of random identifiers in the set of random identifiers is equal to the maximum number of cells via which the MS 8 is expected to make UL transmissions including MS device information useful for estimating TA values for the MS 8 at the BSS 2.

In response to detecting an integrity-protected and encrypted LLC) PDU) comprising a RRLP multilateration TA request from SGSN in radio transmissions via the cell currently serving MS 8 (STEP 900 of Figure 9), the MS processor 34 identifies the set of random IDs from the message and stores them in MS memory (STEP 902 of Figure 9). The MS processor 34 determines suitable cells for multilateration based on one or more measured parameters of radio transmissions of other cells detected via RF front end 36 and antenna 38. For a first suitable cell, the MS processor 34 controls the transmission of a RACH: Multilateration Request message (message 1104 of Figure 11) via a random access channel (RACH) of the cell (STEP 904 of Figure 9), and in response to determining the request was successful, the MS processor 34 controls the establishment of a dedicated connection (temporary block flow - TBF) with the BSS 2 via the BTS 2a for the cell (message exchange 1106 in Figure 11), and controls the unprotected transmission of an RLC block via the dedicated connection (message 1108 in Figure 11 and STEP 906 in Figure 9). The RLC block includes at least (a) an identifier for the MS (e.g. temporary logical link identifier - TLLI), (b) MS device information including the MS synchronisation accuracy and the MS transmission offset, and (c) a first random identifier from the set of random identifiers included in the LLC PDU comprising the RRLP: Multilateration TA request. Once the transmission of the RLC block via the first suitable cell is complete (or if the attempt to establish a dedicated connection via the first suitable cell failed), the MS processor 34 then repeats the same procedure (set of messages shown as block 1101a in Figure 11). In detail, the MS processor 34 controls the transmission of a RACH: Multilateration Request via a random access channel (RACH) of a second suitable cell (STEP 908 of Figure 9), and in response to determining the request was successful, the MS processor 34 controls the establishment of a dedicated connection (temporary block flow - TBF) with the BSS 2 via the BTS 2a for the second suitable cell, and controls the unprotected transmission of an RLC block via the dedicated connection (STEP 910 of Figure 9). The RLC block includes at least (a) the same identifier for the MS (e.g. same TLLI), (b) MS device information including the MS synchronisation accuracy and the MS transmission offset, and (c) a second random identifier from the set of random identifiers included in the LLC PDU comprising the RLLP Multilateration TA Request.

Once the transmission of the RLC block via the second suitable cell is complete (or if the attempt to establish a dedicated connection via the second cell failed), the MS processor then repeats the same procedure for the next cell in the set of cells identified as suitable for multilateration, and so on. The MS processor 34 uses a different respective one of the set of random identifiers for each cell via which a RLC block including MS device information is sent.

If the MS processor determines (STEP 912 of Figure 9) that there are no more suitable cells for which to attempt the transmission of MS device information, the MS processor concludes the multilateration process (STEP 914 of Figure 9).

With reference to Figure 10, the BSC processor controls the storage in BSC memory of the set of random identifiers received from SGSN (STEP 1000 of Figure 10). Each time the BSC processor detects a RLC block including the same MS identifier and MS device information (STEP 1002), the BSC processor identifies the random ID included in the message (STEP 1004), and determines whether the random identifier in the RLC block is included in the set of random identifiers stored in BSC memory for the MS identifier, and, if so, determines whether the random identifier in the RLC block has already been used in another RLC block with the same MS identifier via another cell (STEP 1006 of Figure 10).

If the BSC processor determines that the random identifier in the RLC block is not one of the random identifiers stored in BSC memory for the MS identifier, or if the BSC processor determines that the random identifier in the RLC block was included in another RLC block including the same MS identifier and already received via another cell, the BS processor determines that the RLC block transmission is a rogue transmission (i.e. a transmission by a device other than the MS to which the multilateration request was sent), and does not send any estimated TA value computed using the RLC block transmission to the SMLC 10 (STEP 1010 of Figure 10).

On the other hand, if the BSC processor determines that the random identifier in the RLC block is one of the random identifiers stored in BSC memory for the MS identifier, and was not included in another RLC block including the same MS identifier and already received via another cell, the BS processor determines that the RLC block transmission originates from the MS to which the multilateration request was sent, and does send an estimated TA value computed using the RLC block transmission to the SMLC 10 (STEP 1008 of Figure 10).

The use of this set of random identifiers thus provides a verifiable link between all the RLC block transmissions made by the MS via respective different cells, and enables the network to check whether all received RLC blocks including the same MS identifier properly originated from the same MS 8.

A third embodiment comprises a variation of the second embodiment additionally using the MTA signature technique from the first embodiment. To further improve the security of the above mentioned multilateration procedure in the second embodiment, the MS processor also generates and controls the transmission of a MTA signature using as an input at least the random IDs included in the RLC blocks transmitted via the different cells. The MTA signature generation uses as inputs both the (i) the random IDs, and (ii) information identifying all the cells via which the multilateration attempt was successful; in an example, the MTS signature generation can additionally use as input (iii) the MS sync accuracy and MS Transmission offset information sent for each of the cells via which the multilateration attempt was successful.

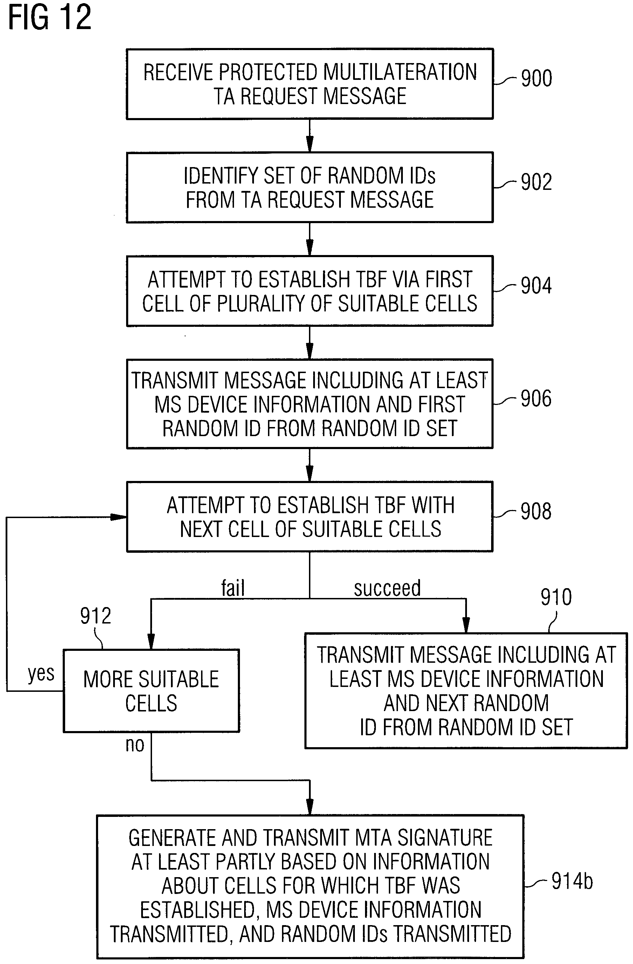

Figure 12 illustrates an example of a set of operations at the MS in accordance with the third embodiment. The set of operations is the same as the set of MS operations for the second embodiment (and the same step numbers are used to indicate identical steps), except that the MS processor 34 completes the multilateration procedure by generating a MTA signature using as inputs all of (i) the random IDs, (ii) the MS sync accuracy and MS Transmission offset information sent for each of the cells via which the multilateration attempt was successful, and (iii) information identifying all the cells via which the multilateration attempt was successful; and controlling transmission of the MTA signature (STEP 914b of Figure 12). As in the second embodiment, the MTA signature may be transmitted as part of a later, additional message or as part of the RLC block for the last of the suitable cells.

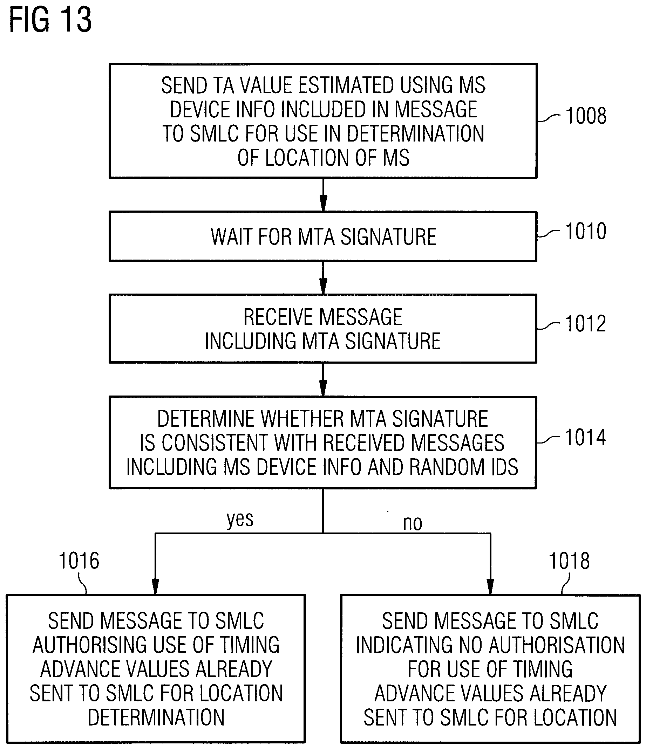

Figure 13 illustrates an example of a set of operations at the BSC in accordance with the third embodiment. The set of operations is the same as the set of BSC operations for the second embodiment, except that after sending estimated TA values to the SMLC (STEP 1008 of Figures 10 and 13), the BNC processor waits for a MTA signature from the MS (STEP 1010). In response to receiving a MTA signature (STEP 1012), the BNC determines whether the MTA signature is consistent with all the RLC blocks received at the BSC (STEP 1014), by e.g. forwarding the MTA signature to the SGSN, where it is compared with a MTA signature independently generated at the SGSN processor. If the determination is positive, the BNC processor controls the sending of a message to SMLC authorising use of the estimated timing advance values already sent to the SMLC (STEP 1016). On the other hand, if the determination is negative, the BNC processor controls the sending of a message to SMLC indicating no authorisation for the estimated timing advance values already sent to the SMLC (STEP 1018).

Location determination based on TA values for a MS does not require GPS functionality at the MS or require specific synchronisation across base stations. Location determination based on TA values is being discussed as a technique for providing localisation and position tracking for loT applications, where low complexity and extended battery life times are a high priority.

Appropriately adapted computer program code product may be used for implementing the embodiments, when loaded to a computer. The program code product for providing the operation may be stored on and provided by means of a carrier medium such as a carrier disc, card or tape. A possibility is to download the program code product via a data network. Implementation may be provided with appropriate software in a server.

Embodiments of the invention may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Programs, such as those provided by Synopsys, Inc. of Mountain View, California and Cadence Design, of San Jose, California automatically route conductors and locate components on a semiconductor chip using well established rules of design as well as libraries of pre stored design modules. Once the design for a semiconductor circuit has been completed, the resultant design, in a standardized electronic format (e.g., Opus, GDSII, or the like) may be transmitted to a semiconductor fabrication facility or "fab" for fabrication.

In addition to the modifications explicitly mentioned above, it will be evident to a person skilled in the art that various other modifications of the described embodiment may be made within the scope of the invention.

## Claims

1. A method, comprising: generating a plurality of messages for radio transmission from a communication device via respective cells of a plurality of cells of a network, wherein the plurality of messages are for estimating timing advance values for the communication device; and generating (414)
a verifiable link between the plurality of messages for transmission to the network,
the method **characterized in that**
generating said verifiable link comprises generating a block of data for transmission to the network based at least partly on information identifying all the cells via which said plurality of messages are transmitted.

2. A method according to claim 1, wherein the information identifying all the cells comprises base station identity codes, BSICs.

3. A method, comprising: receiving (500)
a plurality of messages via a plurality of cells, each message including at least a common communication device identifier for estimating a timing advance value for the communication device; and determining (504) whether to use one or more of the plurality of messages for determining the location of the communication device at least partly on the basis of a result of a determination as to whether the one or more plurality of messages are linked together in a predetermined manner;
the method **characterized in that** the determining comprises looking for a block of data generated on the basis of at least information identifying all the cells via which said plurality of messages are received.

4. A method according to claim 3, wherein the information identifying all the cells comprises base station identity codes, BSICs.

5. An apparatus comprising: a processor (34) and memory (32) including computer program code,
wherein the memory and computer program code are configured to, with the processor, cause the apparatus to: generate (414)
a plurality of messages for radio transmission from a communication device via respective cells of a plurality of cells of a network, wherein the plurality of messages are for estimating timing advance values for the communication device;
and generate a verifiable link between the plurality of messages for transmission to the network,
the apparatus **characterized in that** generating a verifiable link comprises generate a block of data for transmission to the network based at least partly on information identifying all the cells via which said plurality of messages are transmitted.

6. An apparatus according to claim 5, wherein said information identifying all the cells comprises base station identity codes, BSICs.

7. An apparatus according to claim 5, wherein the memory and computer program code are further configured to, with the processor, cause the apparatus to: generate said block of data for transmission in a last message of said plurality of messages or in a further message after said plurality of messages.

8. An apparatus according to claim 5, wherein said block of data comprises an output of an integrity algorithm using at least said information identifying all the cells via which said plurality of messages are transmitted as an input.

9. An apparatus according to claim 5, wherein the memory and computer program code are further configured to, with the processor, cause the apparatus to: include in each of said plurality of messages a respective one of a set of numbers included in a protected message received before generating said plurality of messages.

10. An apparatus according to claim 9, wherein the memory and computer program code are further configured to, with the processor, cause the apparatus to: generate a block of data for transmission to the network based at least partly on all the numbers from said set of numbers included in said plurality of messages.

11. An apparatus according to claim 10, wherein said block of data is also based on information identifying all the cells via which said plurality of messages are transmitted.

12. An apparatus according to claim 10 or claim 11, wherein said protected message includes an instruction to attempt the transmission of messages useful for estimating timing advance values for the communication device via a plurality of cells.

13. An apparatus according to any of claims 5 to 12, wherein said plurality of messages are unprotected messages.

14. An apparatus comprising: a processor (20, 40) and memory (22, 42) including computer program code,
wherein the memory and computer program code are configured to, with the processor, cause the apparatus to: receive (500)
a plurality of messages via a plurality of cells, each message including at least a common communication device identifier for estimating a timing advance value for the communication device; and determine (504)
whether to use one or more of the plurality of messages for determining the location of the communication device at least partly on the basis of a result of a determination as to whether the one or more plurality of messages are linked together in a predetermined manner;
the apparatus **characterized in that** the determining comprises looking for a block of data generated on the basis of at least information identifying all the cells via which said plurality of messages are received.

15. An apparatus according to claim 14, wherein said information identifying all the cells comprises base station identity codes, BSICs.

## Patentansprüche

1. Verfahren, umfassend: Erzeugen einer Mehrzahl von Nachrichten zur Funkübertragung ab einer Kommunikationsvorrichtung über jeweilige Zellen einer Mehrzahl Zellen eines Netzwerks, wobei die Mehrzahl Nachrichten zum Schätzen von Zeitvorlaufwerten für die Kommunikationsvorrichtung dient; und
Erzeugen (414) einer überprüfbaren Verbindung zwischen der Mehrzahl Nachrichten zur Übertragung an das Netzwerk,
wobei das Verfahren **dadurch gekennzeichnet ist, dass**
das Erzeugen der überprüfbaren Verbindung das Erzeugen eines Datenblocks zur Übertragung an das Netzwerk umfasst, der zumindest teilweise auf Daten basiert, die alle Zellen identifizieren, über die die Mehrzahl Nachrichten übertragen wird.

2. Verfahren nach Anspruch 1, wobei die Daten, die alle Zellen identifizieren, Basisstations-Identitätscodes, BSICs, umfassen.

3. Verfahren, umfassend: Empfangen (500) einer Mehrzahl Nachrichten über eine Mehrzahl Zellen, wobei jede Nachricht
zumindest eine gemeinsame Kommunikationsvorrichtungs-Kennung zum Schätzen eines Zeitvorlaufwerts für die Kommunikationsvorrichtung enthält; und Bestimmen (504), ob eine oder mehrere der Mehrzahl Nachrichten zum Bestimmen des Standorts der Kommunikationsvorrichtung, zumindest teilweise auf der Grundlage eines Ergebnisses einer Bestimmung verwendet werden sollen, ob die eine oder mehrere der Mehrzahl Nachrichten in einer vorbestimmten Weise miteinander verbunden sind;
Verfahren, **dadurch gekennzeichnet, dass** das Bestimmen das Suchen nach einem Datenblock umfasst, der auf der Grundlage von zumindest Daten erzeugt wird, die alle Zellen identifizieren, über die die Mehrzahl Nachrichten empfangen wird.

4. Verfahren nach Anspruch 3, wobei die Daten, die alle Zellen identifizieren, Basisstations-Identitätscodes, BSICs, umfassen.

5. Vorrichtung, umfassend: einen Prozessor (34) und einen Speicher (32), der einen Rechnerprogrammcode enthält,
wobei der Speicher und der Rechnerprogrammcode so konfiguriert sind, dass sie zusammen mit dem Prozessor die Vorrichtung zu Folgendem veranlassen: Erzeugen (414) einer Mehrzahl Nachrichten für die Funkübertragung ab einer Kommunikationsvorrichtung über jeweilige Zellen einer Mehrzahl Zellen eines Netzwerks, wobei die Mehrzahl Nachrichten zum Schätzen von Zeitvorlaufwerten für die Kommunikationsvorrichtung dient;
und
Erzeugen einer überprüfbaren Verbindung zwischen der Mehrzahl Nachrichten zur Übertragung an das Netzwerk,
wobei die Vorrichtung **dadurch gekennzeichnet ist, dass** das Erzeugen
einer überprüfbaren Verbindung das Erzeugen eines Datenblocks zur Übertragung an das Netzwerk umfasst, der zumindest teilweise auf Daten basiert, die alle Zellen identifizieren, über die die Mehrzahl Nachrichten übertragen wird.

6. Vorrichtung nach Anspruch 5, wobei die Daten, die alle Zellen identifizieren, Basisstations-Identitätscodes (BSICs) umfassen.

7. Vorrichtung nach Anspruch 5, wobei der Speicher und der Rechnerprogrammcode ferner so konfiguriert sind, dass sie mit dem Prozessor die Vorrichtung zu Folgendem veranlassen: Erzeugen des Datenblocks zur Übertragung in einer letzten Nachricht der Mehrzahl Nachrichten oder in einer weiteren Nachricht nach der Mehrzahl Nachrichten.

8. Vorrichtung nach Anspruch 5, wobei der Datenblock eine Ausgabe eines Integritätsalgorithmus umfasst, der zumindest die Daten als Eingaben verwendet, die alle Zellen identifizieren, über die die Mehrzahl Nachrichten übertragen wird.

9. Vorrichtung nach Anspruch 5, wobei der Speicher und der Rechnerprogrammcode ferner so konfiguriert sind, dass sie mit dem Prozessor die Vorrichtung zu Folgendem veranlassen: In jede der Mehrzahl Nachrichten jeweils eine Zahl aus einem Satz Zahlen aufzunehmen, die in einer geschützten Nachricht enthalten sind, die vor der Erzeugung der Mehrzahl Nachrichten empfangen wurde.

10. Vorrichtung nach Anspruch 9, wobei der Speicher und der Rechnerprogrammcode ferner so konfiguriert sind, dass sie mit dem Prozessor die Vorrichtung zu Folgendem veranlassen: einen Datenblock zur Übertragung an das Netzwerk zu erzeugen, der zumindest teilweise auf allen Zahlen aus dem Satz Zahlen basiert, die in der Mehrzahl Nachrichten enthalten sind.

11. Vorrichtung nach Anspruch 10, wobei der Datenblock auch auf Daten basiert, die alle Zellen identifizieren, über die die Mehrzahl Nachrichten übertragen wird.

12. Vorrichtung nach Anspruch 10 oder 11, wobei die geschützte Nachricht eine Anweisung enthält, die Übertragung von Nachrichten zu versuchen, die für die Abschätzung von Zeitvorlaufwerten für die Kommunikationsvorrichtung über eine Mehrzahl Zellen nützlich sind.

13. Vorrichtung nach einem beliebigen der vorstehenden Ansprüche 5 bis 12, wobei die Mehrzahl Nachrichten ungeschützte Nachrichten sind.

14. Vorrichtung, umfassend: einen Prozessor (20, 40) und einen Speicher (22, 42), der einen Rechnerprogrammcode enthält,
wobei der Speicher und der Rechnerprogrammcode so konfiguriert sind, dass sie mit dem Prozessor die Vorrichtung (500) zu Folgendem veranlassen:
Empfangen
einer Mehrzahl Nachrichten über eine Mehrzahl Zellen, wobei jede Nachricht zumindest eine gemeinsamen Kommunikationsvorrichtungs-Kennung zum Schätzen eines Zeitvorlaufwerts für die Kommunikationsvorrichtung enthält; und Bestimmen (504),
ob eine oder mehrere der Mehrzahl Nachrichten zum Bestimmen des Standorts der Kommunikationsvorrichtung, zumindest teilweise auf der Grundlage eines Ergebnisses einer Bestimmung verwendet werden sollen, ob die eine oder mehrere der Mehrzahl Nachrichten in einer vorbestimmten Weise miteinander verbunden sind;
Vorrichtung, **dadurch gekennzeichnet, dass** das Bestimmen das Suchen nach einem Datenblock umfasst, der auf der Grundlage von zumindest Daten erzeugt wird, die alle Zellen identifizieren, über die die Mehrzahl Nachrichten empfangen wird.

15. Vorrichtung nach Anspruch 14, wobei die Daten, die alle Zellen identifizieren, Basisstations-Identitätscodes, BSICs, umfassen.

## Revendications

1. Procédé, comprenant : la génération d'une pluralité de messages pour une transmission radio à partir d'un dispositif de communication par le biais de cellules respectives d'une pluralité de cellules d'un réseau, dans lequel la pluralité de messages sont destinés à estimer des valeurs d'avance temporelle pour le dispositif de communication ; et
la génération (414) d'une liaison pouvant être vérifiée entre la pluralité de messages pour une transmission au réseau, le procédé étant **caractérisé en ce que**
la génération de ladite liaison pouvant être vérifiée comprend la génération d'un bloc de données pour une transmission au réseau sur la base au moins en partie d'une information identifiant toutes les cellules par le biais desquelles ladite pluralité de messages sont transmis.

2. Procédé selon la revendication 1, dans lequel l'information identifiant toutes les cellules comprend des codes d'identité de station de base, BSIC.

3. Procédé comprenant : la réception (500) d'une pluralité de messages par le biais d'une pluralité de cellules, chaque message incluant au moins un identifiant de dispositif de communication commun pour estimer une valeur d'avance temporelle pour le dispositif de communication ; et le fait de déterminer (504) l'opportunité d'utiliser un ou plusieurs de la pluralité de messages pour déterminer l'emplacement du dispositif de communication au moins en partie sur la base d'un résultat d'une détermination quant à savoir si les un ou plusieurs de la pluralité de messages sont liés ensemble d'une manière prédéterminée ;
le procédé étant **caractérisé en ce que**
la détermination comprend la recherche d'un bloc de données générées sur la base d'au moins une information identifiant toutes les cellules par le biais desquelles ladite pluralité de messages sont reçus.

4. Procédé selon la revendication 3, dans lequel l'information identifiant toutes les cellules comprend des codes d'identité de station de base, BSIC.

5. Appareil comprenant : un processeur (34) et une mémoire (32) incluant un code de programme d'ordinateur,
dans lequel la mémoire et le code de programme d'ordinateur sont configurés pour, avec le processeur, amener l'appareil à : générer (414) une pluralité de messages pour une transmission radio à partir d'un dispositif de communication par le biais de cellules respectives d'une pluralité de cellules d'un réseau, dans lequel la pluralité de messages sont destinés à estimer des valeurs d'avance temporelle pour le dispositif de communication ;
et
générer une liaison pouvant être vérifiée entre la pluralité de messages pour une transmission au réseau, l'appareil étant **caractérisé en ce que** la génération d'une liaison pouvant être vérifiée comprend la génération d'un bloc de données pour une transmission au réseau sur la base au moins en partie d'une information identifiant toutes les cellules par le biais desquelles ladite pluralité de messages sont transmis.

6. Appareil selon la revendication 5, dans lequel ladite information identifiant toutes les cellules comprend des codes d'identité de station de base, BSIC.

7. Appareil selon la revendication 5, dans lequel la mémoire et le code de programme d'ordinateur sont configurés en outre pour, avec le processeur, amener l'appareil à : générer ledit bloc de données pour une transmission dans un dernier message de ladite pluralité de messages ou dans un autre message après ladite pluralité de messages.

8. Appareil selon la revendication 5, dans lequel ledit bloc de données comprend une sortie d'un algorithme d'intégrité utilisant au moins ladite information identifiant toutes les cellules par le biais desquelles ladite pluralité de messages sont transmis en tant qu'entrée.

9. Appareil selon la revendication 5, dans lequel la mémoire et le code de programme d'ordinateur sont configurés en outre pour, avec le processeur, amener l'appareil à : inclure dans chacun de ladite pluralité de messages un respectif d'un ensemble de numéros inclus dans un message protégé reçu avant la génération de ladite pluralité de messages.

10. Appareil selon la revendication 9, dans lequel la mémoire et le code de programme d'ordinateur sont configurés en outre pour, avec le processeur, amener l'appareil à : générer un bloc de données pour une transmission au réseau sur la base au moins en partie de tous les numéros provenant dudit ensemble de numéros inclus dans ladite pluralité de messages.

11. Appareil selon la revendication 10, dans lequel ledit bloc de données est également basé sur une information identifiant toutes les cellules par le biais desquelles ladite pluralité de messages sont transmis.

12. Appareil selon la revendication 10 ou la revendication 11, dans lequel ledit message protégé inclut une instruction pour tenter la transmission de messages utiles pour estimer des valeurs d'avance temporelle pour le dispositif de communication par le biais d'une pluralité de cellules.

13. Appareil selon l'une quelconque des revendications 5 à 12, dans lequel ladite pluralité de messages sont des messages non protégés.

14. Appareil comprenant : un processeur (20, 40) et une mémoire (22, 42) incluant un code de programme d'ordinateur,
dans lequel la mémoire et le code de programme d'ordinateur sont configurés pour, avec le processeur, amener l'appareil à : recevoir (500) une pluralité de messages par le biais d'une pluralité de cellules, chaque message incluant au moins un identifiant de dispositif de communication commun pour estimer une valeur d'avance temporelle pour le dispositif de communication ; et déterminer (504) l'opportunité d'utiliser un ou plusieurs de la pluralité de messages pour déterminer l'emplacement du dispositif de communication au moins en partie sur la base d'un résultat d'une détermination quant à savoir si les un ou plusieurs de la pluralité de messages sont liés ensemble d'une manière prédéterminée ;
l'appareil étant **caractérisé en ce que** la détermination comprend la recherche d'un bloc de données générées sur la base d'au moins une information identifiant toutes les cellules par le biais desquelles ladite pluralité de messages sont reçus.

15. Appareil selon la revendication 14, dans lequel ladite information identifiant toutes les cellules comprend des codes d'identité de station de base, BSIC.
